# EUROPÄISCHE PATENTANMELDUNG

(11) **EP 0 998 973 A1**
(43) Veröffentlichungstag der Anmeldung: **10.05.2000**
(21) Anmeldenummer: 98120273.2
(22) Anmeldetag: 27.10.1998
(51) Int. Cl.: B01J 8/06, B01J 19/00, F28D 7/16

(54) **Gekühlter Rohrbündelreaktor**

(71) Anmelder: Balcke-Dürr Energietechnik GmbH, 40882 Ratingen (DE)
(72) Erfinder: Podhorsky, Miroslav Dr. Ing., 40882 Ratingen (DE); Brenner, Albrecht Dr. Ing., 40882 Ratingen (DE)
(74) Vertreter: Stenger, Watzke & Ring Patentanwälte

(57) **Zusammenfassung**

Ein gekühlter Rohrbündelreaktor ist mit einem ersten, aus einem Verteiler (1), einem Sammler (3) und zwischen Verteiler und Sammler angeordneten Rohren (5) mit darin befindlichen Katalysatoren bestehenden Strömungsweg für das reagierenden Medium versehen sowie ferner mit einem zweiten Strömungsweg für das Kühlmedium. Zur Kühlung bei exothermen Reaktionsprozessen stehen die beiden Medien über die Wandungen der Rohre (5) im Wärmeaustausch. Um einen Rohrbündelreaktor mit möglichst gleicher Anströmgeschwindigkeit der einzelnen Rohre durch das Kühlmedium zu schaffen, setzt sich der zweite Strömungsweg aus parallel zueinander angeordneten Abschnitten (10 bis 14) eines mehrfach um jeweils 180° umgelenkten Rechteckkanals zusammen, wobei die Rohre (5) quer zu der Durchströmungsrichtung der Abschnitte (10 bis 14) durch diese hindurchgeführt sind. Benachbarte Abschnitte des Rechteckkanals sind vorzugsweise durch eine gemeinsame Wand (15) getrennt, durch die die Rohre (5) hindurchgeführt sind.

## Beschreibung

Die Erfindung betrifft einen gekühlten Rohrbündelreaktor mit einem aus einem Verteiler, einem Sammler und zwischen Verteiler und Sammler angeordneten Rohren mit darin befindlichen Katalysatoren bestehenden Strömungsweg für das reagierende Medium und einem Strömungsweg für das Kühlmedium, wobei die beiden Medien über die Wandungen der Rohre im Wärmeaustausch stehen.

Bekannt sind gekühlte Rohrbündelreaktoren, bei denen die Rohre des Rohrbündels insgesamt in Gestalt eines Zylinders zusammengefaßt sind, und die Durchströmung dieses Rohrbündelzylinders durch das Kühlmedium im wesentlichen radial von außen nach innen erfolgt. Die hierbei zur Abführung der Reaktionswärme erzeugte Kühlleistung ist zwar groß, verteilt sich jedoch nicht gleichmäßig über alle Reaktionsrohre. Einige Reaktionsrohre werden stärker, andere weniger stark gekühlt, was wiederum Einfluß auf den darin stattfindenden Reaktionsprozeß hat.

Der Erfindung liegt die **Aufgabe** zugrunde, einen Rohrbündelreaktor möglichst gleicher Anströmgeschwindigkeit der einzelnen Reaktorrohre durch das Kühlmedium zu schaffen.

Zur **Lösung** dieser Aufgabe wird bei einem Rohrbündelreaktor der eingangs genannten Art vorgeschlagen, daß sich der Strömungsweg für das Kühlmedium aus parallel zueinander angeordneten Abschnitten eines zwischen den Abschnitten um jeweils 180° umgelenkten Rechteckkanals zusammensetzt, daß die Rohre quer zu der Durchströmungsrichtung der Abschnitte durch diese hindurchgeführt und die Mittelachsen aller Rohre zusammen in einem Rechteck oder Quadrat angeordnet sind.

Die Führung des Kühlmediums erfolgt erfindungsgemäß also in einem eine besonders gleichmäßige Anströmung der Reaktorrohre ermöglichenden Rechteckkanal. Dieser zeichnet sich durch ein über seine Breite und Höhe nahezu konstantes Geschwindigkeitsprofil des durchströmenden Mediums aus. Da jedoch die in Strömungsrichtung zuerst beaufschlagten Reaktorrohre einen größeren Temperaturgradienten und damit eine bessere Kühlleistung erfahren, als die dahinter gleichsam im Windschatten liegenden Reaktorrohre, erfolgt gemäß einem weiteren Merkmal eine mehrfache Umlenkung des Rechteckkanals um jeweils 180°, wodurch sich parallel zueinander angeordnete Abschnitte des Rechteckkanals ergeben, durch die quer zu der Durchströmungsrichtung die Reaktionsrohre hindurchgeführt sind. Die Umlenkung führt dazu, daß jene Rohre, die in dem vorhergegangenen Abschnitt aufgrund ihrer Anordnung innerhalb des Rohrbündels zuletzt angeströmt wurden, in dem darauffolgenden Abschnitt als erste mit einem entsprechend erhöhten Temperaturgradienten angeströmt werden. Durch die Umlenkung wird daher eine Vergleichmäßigung der Kühlmittelbeaufschlagung der einzelnen Rohre erzielt, deren Mittelachsen zusammen in einem Rechteck oder Quadrat angeordnet sind.

Mit einer Ausgestaltung des Rohrbündelreaktors wird ferner vorgeschlagen, daß benachbarte Abschnitte des Rechteckkanals jeweils durch eine gemeinsame Wand getrennt sind, die mit Öffnungen versehen ist, durch die die Rohre hindurchgeführt sind. Vorzugsweise sind die Rohre abgedichtet durch die Wand hindurchgeführt, wobei diese Abdichtung dadurch erfolgt, daß jedes Rohr bis zur dichtenden Anlage am Rand der jeweiligen Öffnung aufgeweitet wird. Das Aufweiten kann mittels einer Aufweitsonde erfolgen, die axial in das jeweilige Rohr eingeführt, dort auf dem Abschnitt der Öffnung der Wand positioniert und dann mit einem sehr hohen Flüssigkeitsdruck beaufschlagt wird, was zu einer Aufweitung des betreffenden Rohrabschnittes bis zu einem dichten Anliegen am Rand der umgebenden, vorzugsweise kreisförmigen Öffnung führt. Auf diese Weise lassen sich die Rohre auch in solchen Fällen sicher in den Öffnungen der Wände befestigen, in denen angesichts der räumlichen Situation ein Verschweißen der Rohre mit den Wänden nicht möglich ist, etwa infolge für Schweißarbeiten zu eng gebündelter Rohre.

Um eine gleichmäßige Anströmgeschwindigkeit für die einzelnen Rohre, deren Mittelachsen zusammen ein Rechteck oder Quadrat bilden, zu erzielen, ist es von Vorteil, wenn die Rohre sowohl in Durchströmungsrichtung der Abschnitte als auch quer dazu in Reihen angeordnet sind.

Damit bereits beim Eintritt des Kühlmediums in den jeweiligen Abschnitt des Rechteckkanals eine über den Querschnitt möglichst gleichförmige Strömungsgeschwindigkeit vorliegt, wird gemäß einer weiteren Ausgestaltung vorgeschlagen, daß die 180°-Umlenkung in Umlenkkammern erfolgt, die in Durchströmungsrichtung an die Abschnitte angesetzt sind und die über die gesamte Breite der Durchströmung denselben Querschnitt aufweisen. Bei einer ersten Variante der Umlenkkammern ist der Querschnitt rechteckförmig. Gemäß einer zweiten Variante der Umlenkkammer ist der Querschnitt im wesentlichen halbkreisförmig. Die einzelnen Abschnitte des Rechteckkanals können identische Abmessungen aufweisen. Auf diese Weise ist es möglich, den erfindungsgemäßen Rohrbündelreaktor in Abhängigkeit von den jeweiligen Prozeßparametern modular aufzubauen, indem die Anpassung über die Anzahl der hintereinander geschalteten Abschnitte des Rechteckkanals erfolgt.

Weitere Einzelheiten und Vorteile des Gegenstandes der Erfindung werden nachfolgend anhand von Ausführungsbeispielen und unter Bezugnahme auf die anliegenden Zeichnungen erläutert. Auf den Zeichnungen zeigen:
- Fig. 1: in einer Schnittdarstellung einen gekühlten Rohrbündelreaktor;
- Fig. 2: einen Schnitt durch den Rohrbündelreaktor in der in Fig. 1 eingezeichneten horizontalen Ebene II-II;
- Fig. 3: in einer Schnittdarstellung eine andere Ausführungsform eines erfindungsgemäßen Rohrbündelreaktors;

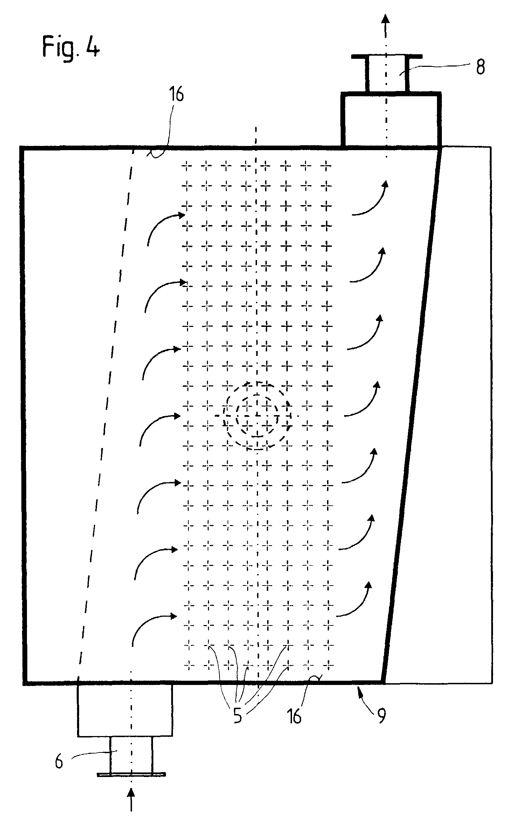

- Fig. 4: einen Schnitt entlang der versetzten Schnittebene IV-IV der Fig. 3 und

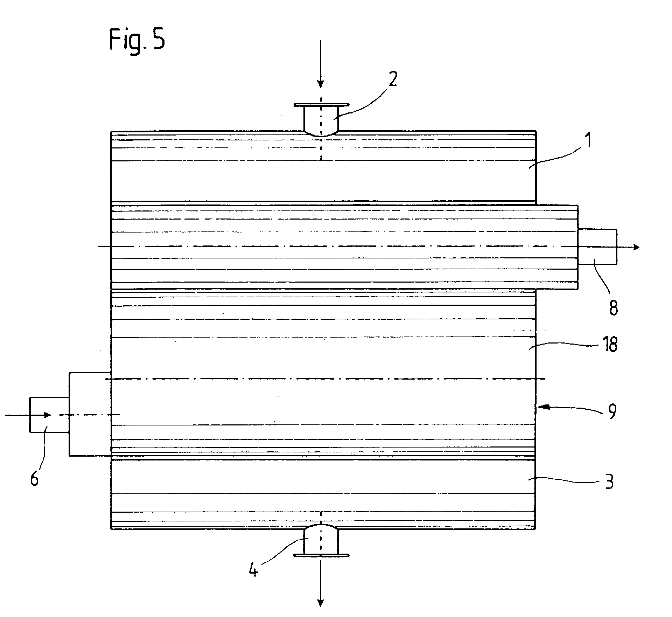

- Fig. 5: eine Ansicht von rechts des Rohrbündelreaktors nach Fig. 3.

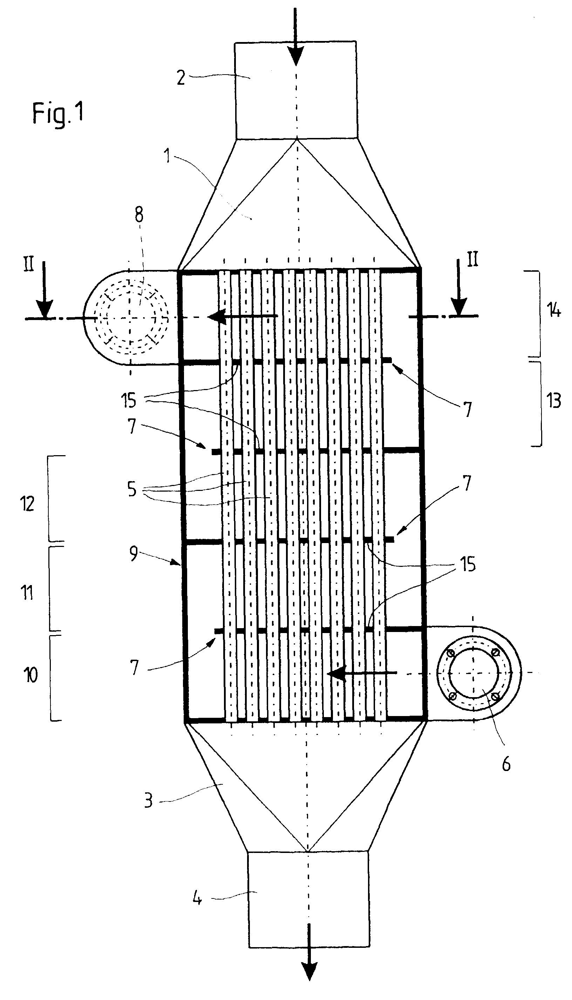

Der in Fig. 1 als erste Ausführungsform dargestellte Rohrbündelreaktor besteht aus einem Verteiler 1 mit Anschlußstutzen 2, einem Sammler 3 mit Anschlußstutzen 4 sowie das Rohrbündel bildenden Rohren 5 zwischen Verteiler 1 und Sammler 3. Über den Anschlußstutzen 2 gelangt das Reaktionsgas in den Verteiler 1 und durchströmt von dort die mit Katalysatoren gefüllten Rohre 5 unter gleichzeitigem Ablauf der chemischen Reaktion von oben nach unten.

Die Reaktion läuft exotherm ab, die freiwerdende Reaktionswärme muß abgeführt werden. Hierzu werden die Rohre 5 von einem geeigneten Kühlmedium umströmt, z. B. einer Salzschmelze. Die Führung des Kühlmediums erfolgt in einem Kreuz-Gegenstrom, wobei das Kühlmedium über den unten an dem Reaktorgehäuse angeordneten Einlaßstutzen 6 in einen Strömungsweg gelangt, der über mehrere Umlenkungen 7 bis zu einem oben an dem Reaktorgehäuse angeordneten Austrittsstutzen 8 führt, über den das Kühlmedium das Reaktorgehäuse 9 verläßt.

Der Strömungsweg des Kühlmediums besteht, wie Fig. 1 erkennen läßt, aus einzelnen Abschnitten 10 bis 14 sowie den 180°-Umlenkungen 7 zwischen diesen Abschnitten 10 bis 14. Die Abschnitte 10 bis 14 sind daher parallel zueinander angeordnet, wobei benachbarte Abschnitte 10 und 11 bzw. 11 und 12 bzw. 12 und 13 bzw. 13 und 14 voneinander jeweils durch eine gemeinsame horizontale Wand 15 getrennt sind. Jede Wand 15 ist mit runden Öffnungen versehen, durch die die Rohre 5 hindurchgeführt sind. Sämtliche Rohre 5 sind einstückig, d. h. sie durchdringen nacheinander sämtlich Abschnitte 10 bis 14 des Strömungsweges des Kühlmediums. Die Umlenkungen 7 werden dadurch gebildet, daß sich die Wände 15 nicht über die gesamte Breite des Reaktorgehäuses 9 erstrecken, sondern nur über einen Teil, so daß am Ende jedes Abschnittes 10 bis 14 ein Überströmquerschnitt frei bleibt, durch den das Kühlmedium unter gleichzeitiger Umlenkung um 180° in den nächsten Abschnitt gelangt.

Bei dem Ausführungsbeispiel nach Fig. 1 sind insgesamt fünf übereinander angeordnete und identische Abmessungen aufweisende Abschnitte 10 bis 14 des Strömungskanals vorhanden. Diese Anzahl kann sich in Abhängigkeit von den Verfahrensparametern ändern. Wegen der identischen Abmessungen jedes einzelnen Abschnittes 10 bis 14 ist insbesondere ein modularer Aufbau des Reaktorgehäuses 9 möglich, wobei lediglich die Länge der durch das Reaktorgehäuse 9 hindurchgeführten Rohre 5 entsprechend angepaßt werden muß.

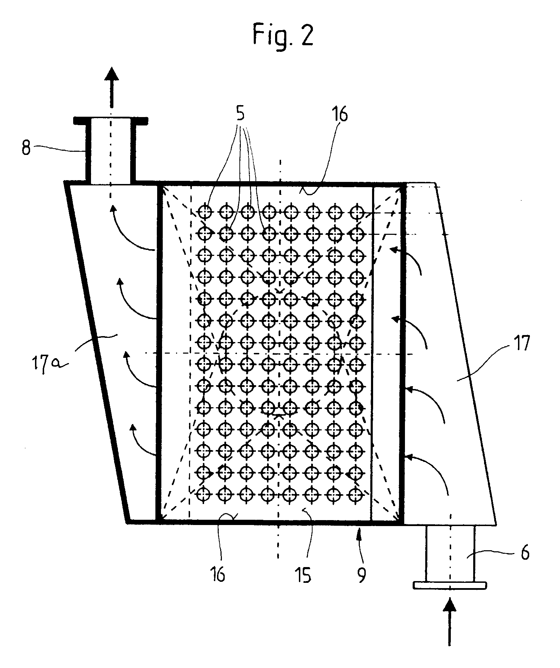

Fig. 1 läßt in Verbindung mit Fig. 2 erkennen, daß jeder Abschnitt 10 bis 14 des Strömungskanals rechteckig ausgebildet ist, und zwar sowohl hinsichtlich des durchströmten Querschnittes als auch hinsichtlich der Gestalt der von den Rohren 5 durchdrungenen Strömungsebene. Insbesondere verlaufen daher sowohl die Wände 15 als auch die Seitenwände 16 jedes Abschnittes 10 bis 14 exakt parallel zueinander.

Infolge der Gestaltung des Strömungsweges für das Kühlmedium als mehrfach umgelenkter Rechteckkanal werden sämtliche Rohre 5 des Rohrbündels mit nahezu gleicher Geschwindigkeit angeströmt. Um auch bereits am Eintritt des untersten, ersten Abschnittes 10 eine über den Strömungsquerschnitt möglichst gleichmäßige Verteilung der Geschwindigkeit des Kühlmediums zu erzielen, führt der Einlaßstutzen 6 über einen sich verjüngenden Verteiler 17 in diesen untersten Abschnitt 10. Zur Erzielung einer gleichmäßigen Abströmung des Kühlmediums ist ein dem Austrittsstutzen vorgeschalteter Sammler 17a mit einem in Strömungsrichtung zunehmenden Querschnitt ausgebildet, um nebeneinanderliegende Rohre 5 mit derselben Geschwindigkeit anzuströmen und quer zur Strömungsrichtung stets denselben Strömungswiderstand zu erzielen.

Desweiteren läßt Fig. 2 erkennen, daß die Rohre 5 sowohl in Durchströmungsrichtung als auch quer dazu in Reihen angeordnet sind, wobei die Mittelachsen aller Rohre 5 zusammen ein Rechteck ergeben. In Durchströmungsrichtung verlaufen die Reihen insbesondere parallel zu den beiden Seitenwänden 16.

Um Bypässe zu vermeiden, müssen die Rohre 5 abgedichtet in den runden Öffnungen der Wände 15 sitzen, durch die sie im rechten Winkel hindurchgeführt sind. Prinzipiell ist es möglich, die Rohre im Bereich der Wanddurchgänge jeweils zu verschweißen. Jedoch ist es wegen der Vielzahl und vor allem engen Bündelung der Rohre nicht möglich, dort mit der Schweißelektrode hinzugelangen. Zur Abdichtung der Rohre in den Öffnungen der Wände 15 wird daher ein Verfahren angewandt, bei dem jedes Rohr bis zur dichten Anlagen am Rand der Öffnung aufgeweitet wird. Hierzu wird eine Aufweitsonde axial in das Rohr eingeführt, an der betreffenden Stelle positioniert und es wird dann ein großer hydraulischer Druck erzeugt, wodurch sich das Rohr partiell aufweitet und dabei eine reib- und formschlüssige Verbindung mit der jeweiligen Wanddurchführung eingeht.

Nicht dargestellt in Fig. 1 ist der Kreislauf für die als Kühlmedium dienende Salzbadschmelze. Hierzu ist eine Umlaufpumpe vorgesehen sowie ein hinter dem Austrittsstutzen 8 angeordneter Salzbadkühler.

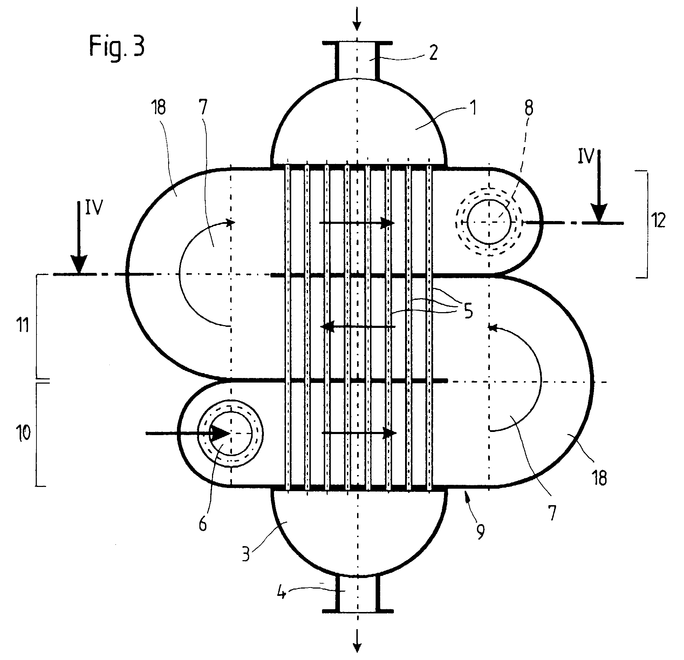

Die Ausführungsform nach den Fig. 1 bis 3 unterscheidet sich von der bereits beschriebenen Ausführungsform durch eine dreistufige Ausbildung des Rechteckkanals sowie durch eine andere konstruktive Lösung für die Umlenkung 7. Die in Durchströmungsrichtung an die Abschnitte 10, 11 angesetzten Umlenkkammern 18 weisen über die gesamte Breite der Durchströmung einen konstanten, im wesentlichen halbkreisförmigen Querschnitt auf und keinen rechteckigen Querschnitt, wie bei dem ersten Ausführungsbeispiel. Durch die halbkreisförmige Umlenkung entstehen geringere Druckverluste des Kühlmediums beim Durchströmen des Reaktorgehäuses.

### Bezugszeichenliste

- 1: Verteiler
- 2: Anschlußstutzen
- 3: Sammler
- 4: Anschlußstutzen
- 5: Rohr
- 6: Einlaßstutzen
- 7: Umlenkung
- 8: Austrittsstutzen
- 9: Reaktorgehäuse
- 10: Abschnitt des Kanals
- 11: Abschnitt des Kanals
- 12: Abschnitt des Kanals
- 13: Abschnitt des Kanals
- 14: Abschnitt des Kanals
- 15: Wand
- 16: Seitenwand
- 17: Verteiler
- 17a: Sammler
- 18: Umlenkkammer

## Patentansprüche

1. Gekühlter Rohrbündelreaktor mit einem aus einem Verteiler (1), einem Sammler (3) und zwischen Verteiler (1) und Sammler (3) angeordneten Rohren (5) mit darin befindlichen Katalysatoren bestehenden Strömungsweg für das reagierende Medium und einem Strömungsweg für das Kühlmedium, wobei die beiden Medien über die Wandungen der Rohre (5) im Wärmeaustausch stehen,
**dadurch gekennzeichnet,**
daß sich der Strömungsweg für das Kühlmedium aus parallel zueinander angeordneten Abschnitten (10 bis 14) eines zwischen den Abschnitten um jeweils 180° umgelenkten Rechteckkanals zusammensetzt, daß die Rohre (5) quer zu der Durchströmungsrichtung der Abschnitte (10 bis 14) durch diese hindurchgeführt und daß die Mittelachsen aller Rohre (5) zusammen in einem Rechteck oder Quadrat angeordnet sind.

2. Rohrbündelreaktor nach Anspruch 1, dadurch gekennzeichnet, daß benachbarte Abschnitte (10, 11; 11, 12; 12, 13; 13, 14) des Rechteckkanals jeweils durch eine gemeinsame Wand (15) getrennt sind, die mit Öffnungen versehen ist, durch die die Rohre (5) hindurchgeführt sind.

3. Rohrbündelreaktor nach Anspruch 2, dadurch gekennzeichnet, daß jedes Rohr (5) bis zur dichtenden Anlage am Rand der jeweiligen Öffnung aufgeweitet ist.

4. Rohrbündelreaktor nach einem der Ansprüche 1 bis 3, dadurch gekennzeichnet, daß die Rohre (5) sowohl in Durchströmungsrichtung der Abschnitte (10 bis 14) als auch quer dazu in Reihen angeordnet sind.

5. Rohrbündelreaktor nach einem der Ansprüche 1 bis 4, dadurch gekennzeichnet, daß die 180°-Umlenkung in Umlenkkammern (18) erfolgt, die in Durchströmungsrichtung an die Abschnitte (10 bis 14; 10 bis 12) angesetzt sind und die über die gesamte Breite der Durchströmung denselben Querschnitt aufweisen.

6. Rohrbündelreaktor nach Anspruch 5, dadurch gekennzeichnet, daß der Querschnitt rechteckförmig ist.

7. Rohrbündelreaktor nach Anspruch 5, dadurch gekennzeichnet, daß der Querschnitt im wesentlichen halbkreisförmig ist.

8. Rohrbündelreaktor nach einem der vorangehenden Ansprüche, dadurch gekennzeichnet, daß die einzelnen Abschnitte (10 bis 14; 10 bis 12) des Rechteckkanals identische Abmessungen aufweisen.

9. Rohrbündelreaktor nach mindestens einem der Ansprüche 1 bis 8, dadurch gekennzeichnet, daß die Verteiler (17) und Sammler (17a) sowie Umlenkkammern (18) zwecks Erzielung eines gleichen Strömungswiderstandes einen in Strömungsrichtung abnehmenden bzw. zunehmenden Querschnitt haben.
